Europäisches Patentamt

European Patent Office

Office européen des brevets

(11) Veröffentlichungsnummer: **0 205 877**
**B1**

(12) **EUROPÄISCHE PATENTSCHRIFT**

(45) Veröffentlichungstag der Patentschrift:
**08.08.90**

(21) Anmeldenummer: **86106482.2**

(22) Anmeldetag: **13.05.86**

(51) Int. Cl.⁵: **H02K 3/28, H02P 1/26**

(54) Teilwicklungsschaltung zum Anfahren von Drehstrommotoren.

(30) Priorität: **22.05.85 DE 3518431**

(43) Veröffentlichungstag der Anmeldung:
**30.12.86 Patentblatt 86/52**

(45) Bekanntmachung des Hinweises auf die Patenterteilung:
**08.08.90 Patentblatt 90/32**

(84) Benannte Vertragsstaaten:
**DE FR GB IT**

(56) Entgegenhaltungen:
**EP-A- 0 059 245**
**DE-C- 280 052**
**FR-A- 2 262 431**
**US-A- 1 899 859**
**US-A- 1 901 586**

(73) Patentinhaber: **Siemens Aktiengesellschaft,
Wittelsbacherplatz 2, D-8000 München 2(DE)**

(72) Erfinder: **Ghosh, Shyamal-Krishna, Dipl.-Ing.,
Hohenrotherstrasse 22, D-8740 Bad
Neusdtadt/Saale(DE)**

**Beschreibung**

Die Erfindung betrifft eine Teilwicklungsschaltung nach dem Oberbegriff des Anspruchs 1.

Durch die US-A-1 899 859 ist eine solche Teilwicklungsschaltung mit räumlich um 360°/p und durch die US-A-1 901 586 eine entsprechende Teilwicklungsschaltung mit räumlich um 360°/2p zueinander versetzten Spulen bzw. Spulengruppen bekannt. Bei den durch diese beiden Patentschriften bekannten Teilwicklungsschaltungen sind alle zu jeweils einer für sich schaltbaren Teilwicklung gehörenden Spulen in Reihe geschaltet. Damit ist die Anzahl der herzustellenden Sternpunktverbindung auf die Anzahl der getrennt zu schaltenden Teilwicklungen reduziert.

Die in diesen Schriften dargestellten und beschriebenen Ausführungsbeispiele beziehen sich auf Motoren mit einer geraden Zahl von Nuten pro Pol und Phase. Damit steht bei zwei getrennt zu schaltenden Teilwicklungen für jede Teilwicklung die gleiche Anzahl von Nuten pro Pol und Phase zur Verfügung, so daß beide Teilwicklungen gleich ausgeführt werden können. Bei ungerader Nutzahl können die beiden Teilwicklungen dagegen von vornherein nicht mehr mit einer gleichen Anzahl von Spulen oder Spulengruppen ausgebildet werden. Zwar wird in den beiden Patentschriften der Hinweis gegeben, daß die Motoren mit jeder beliebigen Polzahl und auch beliebiger Anzahl von Nuten pro Pol und Phase ausgeführt werden können; es fehlt jedoch jeglicher Hinweis wie bei einer ungeraden Anzahl von Nuten pro Pol und Phase die Teilwicklungen gestaltet werden müssen, damit für beide die gleiche Windungszahl erreicht wird.

Der Erfindung liegt daher die Aufgabe zugrunde, eine Teilwicklungsschaltung der gattungsgemäßen Art zu schaffen, bei der die beiden getrennt schaltbaren Teilwicklungen jeweils die gleiche Windungszahl aufweisen.

Die Lösung der gestellten Aufgabe gelingt durch die im Kennzeichen des Anspruchs 1 angegebenen Merkmale.

Anhand mehrerer in der Zeichnung dargestellter Ausführungsbeispiele wird die Erfindung nachfolgend näher erläutert. Es zeigt jeweils in einphasiger Darstellung:

Fig. 1 eine Teilwicklungsschaltung für einen vierpoligen Motor mit einer Nutzahl q = 3, bei der die zuerst einschaltbare Teilwicklung aus um 360°/p versetzten Spulengruppen besteht,

Fig. 2 eine Teilwicklungsschaltung für einen vierpoligen Motor mit einer Nutzahl q = 3, bei der die zuerst einschaltbare Teilwicklung aus um 360°/2p versetzten Spulen besteht,

Fig. 3 eine Teilwicklungsschaltung für einen vierpoligen Motor mit einer Nutzahl q = 5, bei der die zuerst einschaltbare Teilwicklung aus um 360°/p versetzten Spulengruppen besteht,

Fig. 4 eine Teilwicklungsschaltung für einen vierpoligen Motor mit einer Nutzahl q = 5, bei der die zuerst einschaltbare Teilwicklung aus um 360°/2p versetzten Spulengruppen besteht.

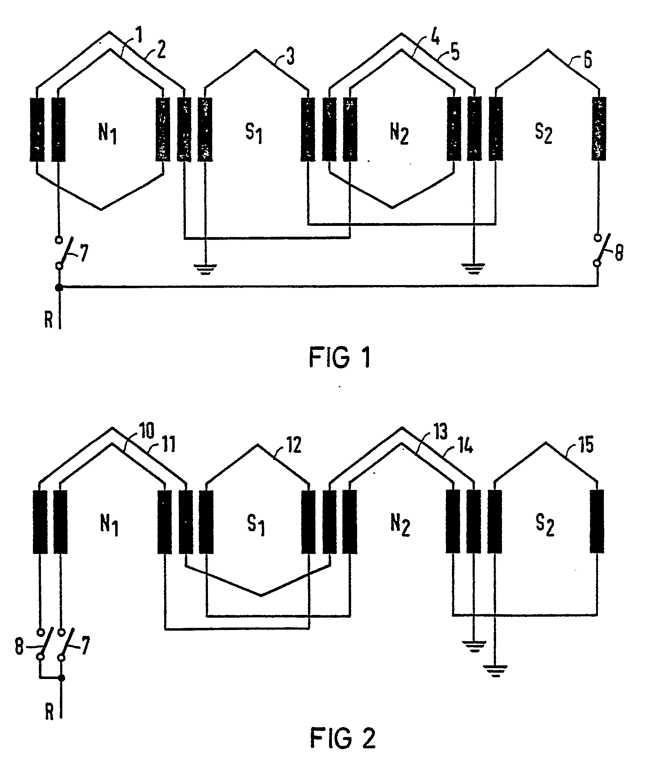

Bei der in Fig. 1 dargestellten Teilwicklungsschaltung sind zwei Spulen 1 und 2 eines Poles N1 mit zwei Spulen 4 und 5 des zu dem einen Pol N1 gleichnamigen anderen Poles N2 in Reihe geschaltet. Diese vier in Reihe geschalteten Spulen 1, 2, 4 und 5 bilden die zuerst einschaltbare Teilwicklung, die mittels eines ersten Schalters 7 an die Netzphase R geschaltet werden kann.

Die beiden übrigen Spulen 3 und 6 der gleichnamigen Gegenpole S1 und S2 sind ebenfalls in Reihe geschaltet und können als später zuschaltbare Teilwicklung mittels eines zweiten Schalters 8 an die Netzphase R geschaltet werden. Der zweite Schalter 8 wird beim Anlauf des Motors zeitlich nach dem ersten Schalter 7 geschlossen. Da die später zuschaltbare Teilwicklung nur aus zwei Spulen besteht, sind die Spulen 3 und 6 mit der doppelten Windungszahl gegenüber den die zuerst einschaltbare Teilwicklung bildenden vier Spulen 1, 2, 4 und 5 ausgeführt, so, daß beide Teilwicklungen wieder die gleiche Gesamtwindungszahl aufweisen.

Die Teilwicklungsschaltung nach Fig. 2 zeigt eine andere Art der Reihenschaltung der die zuerst einschaltbare Teilwicklung bildenden Spulen. Bei diesem Ausführungsbeispiel sind die Spulen 10, 12, 13 und 15 der jeweils benachbarten ungleichnamigen Pole N1, S1, N2, S2 in Reihe geschaltet und bilden die mittels des ersten Schalters 7 zuerst einschaltbare Teilwicklung. Die restlichen Spulen 11 und 14 sind ebenfalls in Reihe geschaltet und bilden die mittels des zweiten Schalters 8 später zuschaltbare Teilwicklung. Damit die später zuschaltbare Teilwicklung die gleiche Gesamtwicklungszahl wie die aus den vier Spulen 10, 12, 13 und 15 bestehende, zuerst einschaltbare Teilwicklung aufweist, sind die beiden Spulen 11 und 14 gegenüber den vier Spulen 10, 12 13 und 15 mit der doppelten Windungszahl ausgeführt.

Jede der in den Fig. 1 und 2 dargestellten Teilwicklungsschaltungen weist nur noch zwei Sternpunkte auf, nämlich je einen Sternpunkt für die zuerst und für die später einschaltbare Teilwicklung.

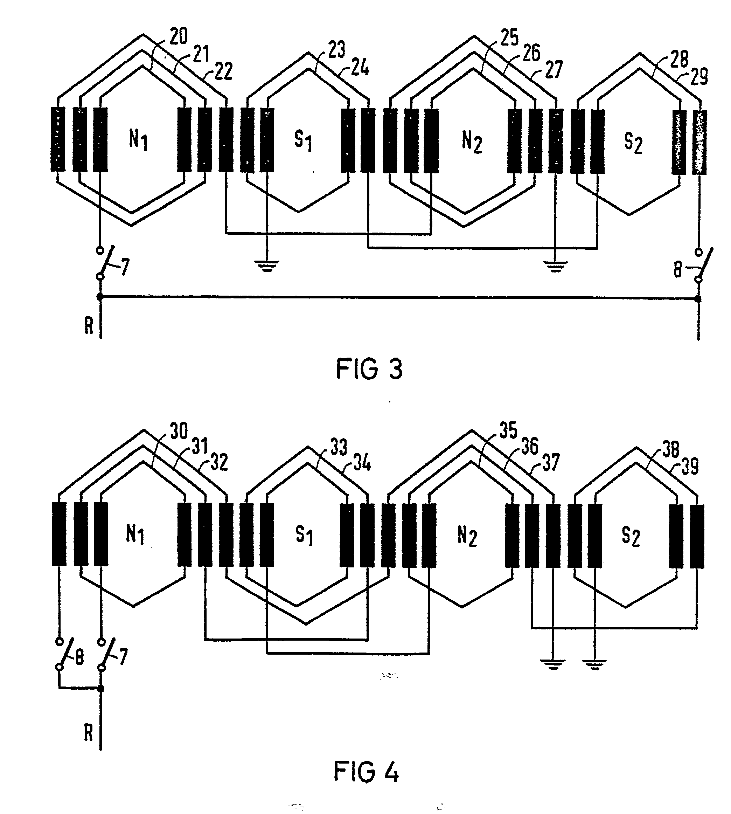

Bei der in Fig. 3 für einen Motor mit einer Nutzahl q = 5 dargestellten Teilwicklungsschaltung, die in ihrer Art der in Fig. 1 gezeigten Teilwicklungsschaltung entspricht, wird wiederum die zuerst einschaltbare Teilwicklung aus der Reihenschaltung der Spulen 20, 21 und 22 des einen Poles N1 und den Spulen 25, 26 und 27 des zu dem einen Pol N1 gleichnamigen anderen Poles N2 gebildet. Die restlichen Spulen 23, 24, 28 und 29 der beiden gleichnamigen Gegenpole S1 und S2 sind ebenfalls in Reihe geschaltet und bilden die später einschaltbare Teilwicklung. Die Einschaltung der beiden Teilwicklungen erfolgt zeitlich nacheinander durch die beiden Schalter 7 und 8. Um wiederum für beide Teilwicklungen jeweils die gleiche Gesamtwindungszahl zu erreichen, verhält sich die Windungszahl der die später einschaltbare Teilwicklung bildenden Spulen 23, 24 , 28 und 29 zu der Windungszahl der die zuerst einschaltbare Teilwicklung bildenden Spulen 20, 21, 22, 25, 26 und 27 wie 3 : 2.

Das Ausführungsbeispiel nach Fig. 4 entspricht dem Ausführungsbeispiel nach Fig. 2. Dementsprechend sind die Spulen 30, 31, 33, 34, 35, 36, 38 und 39 der jeweils benachbarten ungleichnamigen Pole N1, S1, N2 und S2 in Reihe geschaltet. Diese in Reihe geschalteten Spulen bilden wiederum die mittels des ersten Schalters7 zuerst einschaltbare Teilwicklung. Die restlichen Spulen 32 und 37 sind auch wieder in Reihe geschaltet und bilden die durch den zweiten Schalter später zuschaltbare Teilwicklung.

Die Windungszahl der Spulen 32 und 37 verhält sich zu der Windungszahl der die zuerst zuschaltbare Teilwicklung bildenden Spulen 30, 31, 33, 34, 35, 36, 38 und 39 wie 4 : 1. Somit ist für beide Teilwicklungen jeweils wieder eine gleiche Gesamtwindungszahl sichergestellt.

Wie die Ausführungsbeispiele nach den Fig. 3 und 4 zeigen, weisen auch die Teilwicklungsschaltungen für Motoren mit höheren Nutzahlen nur noch einen Sternpunkt je Teilwicklung auf.

## Patentansprüche

1. Teilwicklungsschaltung zum Anfahren von Drehstrommotoren, die eine Polpaarzahl p ≥ 2 und eine ungerade Nutzahl (Nuten pro Pol und Phase) q > 1 aufweisen, bei welcher Schaltung die als Einschichtwicklung ausgeführte Motorwicklung in zwei Teilwicklungen unterteilt ist, die nacheinander einschaltbar sind, wobei die zuerst einschaltbare Teilwicklung aus der Reihenschaltung von über den gesamten Motorumfang symmetrisch verteilten Spulen (1, 2; 4, 5 bzw. 10, 12, 13, 15) bzw. Spulengruppen (20, 21, 22, 25, 26, 27 bzw. 30, 31, 33-36, 38, 39) besteht, die räumlich entweder um 360°/p zueinander versetzt und so miteinander verbunden sind, daß sie gleichnamige Pole (N1, N2) bilden oder um 360°/2p zueinander versetzt und so miteinander verbunden sind, daß sie ungleichnamige Pole (N1, S1, N2, S2) bilden, bei welcher Teilwicklungsschaltung ferner die später einschaltbare Teilwicklung zu der zuerst einschaltbaren Teilwicklung parallel geschaltet ist und die verbleibenden, die später einschaltbare Teilwicklung bildenden Spulen (3, 6; 11, 14; 32, 37) bzw. die Spulengruppen (23, 24; 28, 29) ebenfalls insgesamt in Reihe geschaltet sind, dadurch gekennzeichnet, daß die zuerst einschaltbare Teilwicklung je Phasenstrang mehr als die Hälfte der Spulen umfaßt und daß sich ferner die Windungszahl der zur später einschaltbaren Teilwicklung gehörenden Einzelspulen (3, 6; 11, 14; 23, 24, 28, 29; 32, 37) zu der Windungszahl der zu der zuerst einschaltbaren Teilwicklung gehörenden Einzelspulen (1, 2, 4, 5; 10, 12, 13, 15; 20, 21, 22, 25, 26, 27; 30, 31, 33-36, 38, 39) wie die Anzahl der zur zuerst einschaltbaren Teilwicklung gehörenden Einzelspulen (1, 2, 4, 5; 10, 12, 13, 15; 20, 21, 22, 25, 26, 27; 30, 31, 33-36, 38, 39) zu der Anzahl der zur später einschaltbaren Teilwicklung gehörenden Einzelspulen (3, 6; 11, 14; 23, 24, 28, 29; 32, 37) verhält.

## Claims

1. Partial winding connection for starting three-phase motors which have a number of pole pairs p ≥ 2 and an odd slot number (slots per pole and phase) q > 1, with which connection the motor winding constructed as single-layer winding is subdivided into two partial windings which can be switched on successively, the partial winding which can be switched on first consisting of the series connection of coils (1, 2; 4, 5 or 10, 12, 13, 15) or coil groups (20, 21, 22, 25, 26, 27 or 30, 31, 33–36, 38, 39) distributed symmetrically over the entire motor circumference, which are either offset from one another spatially by 360°/p and are connected to one another in such a way that they form like poles (N1, N2) or are offset from one another by 360°/2p and are connected to one another in such a way that the form unlike poles (N1, S1, N2, S2), with which partial winding connection moreover the partial winding which can be switched on later is connected in parallel with the partial winding which can be switched on first and the remaining coils (3, 6; 11, 14; 32, 37) or the coil groups (23, 24; 28, 29), forming the partial winding which can be switched on later, likewise are connected in series as a whole, characterized in that the partial winding can be switched on first per phase line comprises more than half of the coils and in that moreover the number of turns of the single coils (3, 6; 11, 14; 23, 24, 28, 29; 32, 37) appertaining to the partial winding which can be switched on later is to the number of turns of the single coils (1, 2, 4, 5; 10, 12, 13, 15; 20, 21, 22, 25, 26, 27; 30, 31, 33–36, 38, 39) appertaining to the partial winding which can be switched on first as the number of the single coils (1, 2, 4, 5; 10, 12, 13, 15; 20, 21, 22, 25, 26, 27; 30, 31, 33–36, 38, 39) appertaining to the partial winding which can be switched on first is to the number of the single coils (3, 6; 11, 14; 23, 24, 28, 29; 32, 37) appertaining to the partial winding which can be switched on later.

## Revendications

1. Circuit à enroulements partiels pour le démarrage de moteurs triphasés, qui comportent un nombre de paires de pôles p ≥ 2 et un nombre impair d'encoches (encoches par pôle et par phase) q > 1, et dans lequel l'enroulement du moteur réalisé sous la forme d'un enroulement monocouche est subdivisé en deux enroulements partiels qui peuvent être branchés successivement, l'enroulement partiel pouvant être branché en premier lieu étant constitué par le montage en série de bobines (1, 2; 4, 5 ou 10, 12, 13, 15) ou de groupes de bobines (20, 21, 22, 25, 26, 27 et 30, 31, 33-36, 38, 39), répartis symétriquement sur la totalité de la périphérie du moteur et qui soit sont décalés spatialement entre eux de 360°/p et sont reliés entre eux de manière à former des pôles de même nom (N1, N2), soit sont décalés spatialement entre eux de 360°/2p et sont reliés entre eux de manière à former des pôles de noms opposés (N1, S1, N2, S2), et dans lequel, en outre, l'enroulement partiel pouvant être branché ultérieurement est branché en parallèle avec l'enroulement partiel pouvant être branché en premier lieu, et les autres bobines (3, 6; 11, 14; 32, 37), qui forment l'enroulement partiel pouvant être branché ultérieurement, ou les groupes de bobines (23, 24; 28, 29) sont également tous branchés en série, caractérisé par le fait que l'enroulement partiel pouvant être branché en premier lieu comporte, pour chaque conducteur de phase, plus de la moitié des bobines, et

qu'en outre le rapport du nombre des spires des bobines individuelles (3, 6; 11, 14; 23, 24, 28, 29; 32, 37), qui font partie d'un enroulement partiel pouvant être branché ultérieurement, au nombre de spires des bobines individuelles (1, 2, 4, 5; 10, 12, 13, 15; 20, 21, 22, 25, 26, 27; 30, 31, 33-36, 38, 39), qui sont associées à l'enroulement partiel pouvant être branché en premier lieu, correspond au rapport du nombre des bobines individuelles (1, 2, 4, 5; 10, 12, 13, 15; 20, 21, 22, 25, 26, 27; 30, 31, 33-36, 38, 39), qui font partie de l'enroulement partiel pouvant être branché en premier lieu, au nombre des bobines individuelles (3, 6; 11, 14; 23, 24, 28, 29; 32, 37), qui font partie de l'enroulement partiel pouvant être branché ultérieurement.

EP 0 205 877 B1

FIG 1

FIG 2

EP 0 205 877 B1

FIG 3

FIG 4